**Europäisches Patentamt**

**European Patent Office**

**Office européen des brevets**

(19)

(11) Numéro de publication: **0 161 152**
**B1**

(12) # FASCICULE DE BREVET EUROPEEN

(45) Date de publication du fascicule du brevet:
**27.01.88**

(21) Numéro de dépôt: **85400649.1**

(22) Date de dépôt: **02.04.85**

(51) Int. Cl.⁴: **G 01 M  1/32,** F 16 F  15/32,
G 01 C  25/00

(54) **Procédé pour équilibrer un volant, dispositif pour souder des billes et leur application à un volant de gyroscope.**

(30) Priorité: **02.04.84  FR 8405156**

(43) Date de publication de la demande:
**13.11.85 Bulletin 85/46**

(45) Mention de la délivrance du brevet:
**27.01.88 Bulletin 88/4**

(84) Etats contractants désignés:
**DE GB IT**

(56) Documents cités:
**FR - A - 1 148 177**
**US - A - 1 489 699**

(73) Titulaire: **SOCIETE DE FABRICATION D'INSTRUMENTS DE MESURE (S.F.I.M.), 13, avenue Marcel Ramolfo-Garnier, F-91301 Massy (FR)**

(72) Inventeur: **Descourt, Gilles, 26, rue Appert, F-91300 Massy (FR)**
Inventeur: **Noel, Claude, 85, avenue du Général de Gaulle, F-94500 Champigny S/Marne (FR)**

(74) Mandataire: **Schrimpf, Robert et al, Cabinet Regimbeau 26, Avenue Kléber, F-75116 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne l'équilibrage d'un volant et elle s'applique en particulier à l'équilibrage d'un volant de gyroscope.

Il est connu de réaliser l'équilibrage d'une pièce tournante en réalisant aux endroits désirés un apport de métal par soudage (brevet US-A-1 489 699). Cette méthode connue est difficile à mettre en œuvre dans le cas où la pièce tournante est un volant de gyroscope en raison de la grande précision d'équilibrage qui est nécessaire et en raison des difficultés de positionner avec précision les apports de métal lorsque le gyroscope est de petites dimensions.

La présente invention vise à fournir une solution tenant compte de ces difficultés et particulièrement bien adaptée à l'équilibrage d'un volant de petite taille.

On y parvient, selon l'invention, en réalisant l'équilibrage par soudage de billes métalliques calibrées, comme les billes d'acier pour roulement que l'on trouve dans le commerce.

L'invention concerne également un dispositif pour le soudage des billes sur le volant.

L'invention sera décrite ci-après en référence aux figures du dessin joint sur lequel:

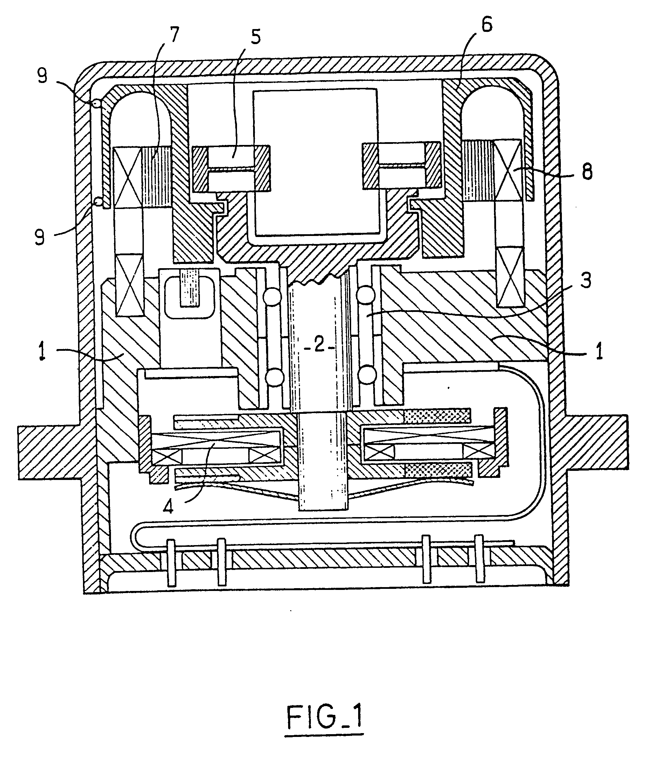

La figure 1 est une coupe axiale d'un gyroscope dont le volant est équilibré selon la technique de la présente invention.

La figure 2 est une coupe longitudinale d'un crayon de soudage de billes conforme à l'invention pour la mise en œuvre du procédé de l'invention.

La figure 3 est une vue agrandie de l'extrémité avant du crayon de soudage de la figure 2, et

La figure 4 est un schéma électrique de l'ensemble du dispositif de soudage.

Ce gyroscope comprend un support 1 constituant un boîtier définissant un passage central pour un arbre 2 maintenu dans le passage par des roulements précontraints 3. L'arbre est entraîné en rotation à une extrémité par un moteur 4 et, à son autre extrémité, il est articulé par un montage à la cardan 5 avec un volant 6 qui se présente dans cet exemple sous la forme d'une cloche à l'intérieur de laquelle a été aménagé un logement en forme de tore à section rectangulaire dans lequel est située une couronne d'aimants 7 fixés au volant en face des bobines de commande 8. Cet ensemble est normalement recouvert par un capot.

Selon l'invention, sur la face extérieure latérale du volant sont soudées, à des endroits choisis, des billes métalliques 9, par exemple des billes pour roulement en acier d'un diamètre de 0,3 à 1 mm. Ces billes sont soudées par point par soudure autogène électrique.

On utilise de préférence un outillage spécial qui constitue l'un des objets de la présente invention.

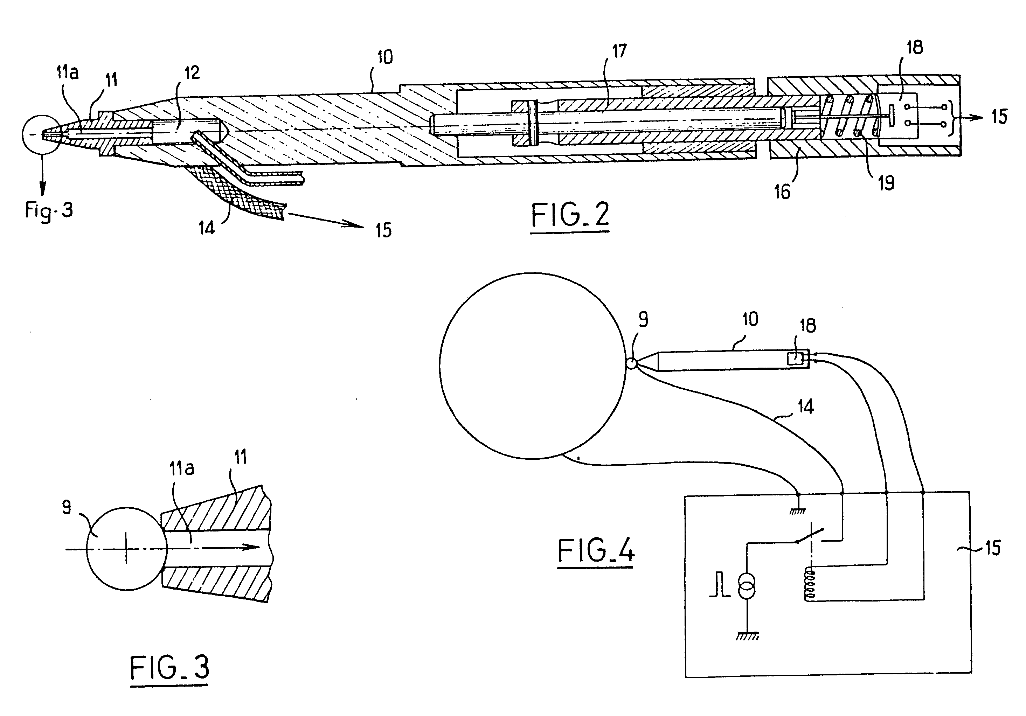

Ce dispositif (figure 2) comprend un support métallique 10, par exemple un support allongé mince apte à être tenu dans une main comme un crayon, équipé à son extrémité avant ou nez d'une tête de soudage 11 traversée par un canal longitudinal 11a communiquant avec une chambre d'aspiration 12 située à l'intérieur du support et reliée à un conduit d'aspiration à relier à une source d'aspiration. La buse 11 est conçue à son extrémité avant pour retenir une bille 9 sous l'effet de l'aspiration, comme on le voit sur la figure 3.

La buse est de préférence démontable pour pouvoir être changée lorsqu'elle est usée. Au support 10 est fixé, de façon à établir une liaison électrique, un conducteur 14 dont l'autre extrémité aboutit à un générateur d'impulsions de soudage 15. Le fonctionnement de ce générateur est commandé par un interrupteur qui est avantageusement placé sur le support 10.

Dans l'exemple représenté, cet interrupteur comprend un poussoir 16 placé dans le prolongement arrière du support et qui est monté coulissant sur une tige 17 fixée dans le support 10. Un interrupteur à micro-contact 18, dont les contacts sont reliés au générateur 15 (figure 4), est fixé dans le poussoir et un ressort 19 est monté sur la tige 17 et le micro-contact. En poussant le poussoir 16 contre l'action du ressort 19, on applique une pression progressive sur la base 11 et la bille 9 et quand cette pression correspond à une contraction du ressort 19 telle que l'interrupteur 18 est actionné par la tige 17, le micro-contact déclenche la production des impulsions de soudage. On notera que le ressort 19 règle la pression d'application de la bille qui constitue l'un des paramètres de l'opération de soudage.

Le choix de l'emplacement des billes sur le rotor est fait par une méthode connue pour l'équilibrage d'un rotor.

Bien entendu, l'invention n'est par limitée à ce gyroscope particulier.

Le dispositif représenté peut avoir d'autres applications: par exemple on peut l'utiliser pour souder des billes destinées à fixer provisoirement deux pièces l'une à l'autre.

## Revendications

1. Procédé pour équilibrer un volant, dans lequel on soude au volant des masselottes constituées par des billes métalliques calibrées (9).

2. Procédé selon la revendication 1, caractérisé en ce que les billes (9) ont un diamètre de 0,3 à 1 mm.

3. Dispositif pour la mise en œuvre d'un procédé selon l'une des revendications 1 et 2, caractérisé en ce qu'il comprend un support (10) qui porte une tête de soudage métallique (11) conçue pour retenir une bille sous l'effet d'une aspiration, la dite tête étant traversée par un canal d'aspiration (11a) communiquant avec une chambre d'aspiration (12) située à l'intérieur du support et reliée à un conduit d'aspiration, un conducteur (14) d'impulsions de soudage reliant la tête à un générateur d'impulsions et un interrupteur à poussoir (16-19) monté sur le support et commandant le déclenchement des impulsions de soudage.

4. Dispositif selon la revendication 3, caractérisé en ce que le support est un support allongé (10) à tenir dans la main.

5. Application d'un procédé selon l'une des revendications 1 et 2 ou d'un dispositif selon la revendication 3 ou 4 à l'équilibrage d'un volant de gyroscope.

6. Volant de gyroscope (6) caractérisé en ce qu'il est équilibré par des billes métalliques calibrées (9) soudées au volant.

7. Volant selon la revendication 6, caractérisé en ce que les billes (9) ont un diamètre de 0,3 à 1 mm.

8. Volant de gyroscope selon la revendication 6 ou 7, caractérisé en ce que les billes (9) sont des billes d'acier pour roulement.

## Patentansprüche

1. Verfahren zum Auswuchten eines Schwungrades, bei dem am Schwungrad Fliehgewichte angeschweisst werden, die aus kalibrierten Metallkugeln (9) bestehen.

2. Verfahren nach Anspruch 1, dadurch gekennzeichnet, dass die Kugeln (9) einen Durchmesser von 0,3 bis 1 mm aufweisen.

3. Vorrichtung zum Ausführen des Verfahrens nach einem der Ansprüche 1 und 2, gekennzeichnet durch einen Träger (10) für einen metallischen Schweisskopf (11), der zum Festhalten einer Kugel unter Saugwirkung ausgelegt und von einem Saugkanal (11a) durchdrungen ist, der mit einer Saugkammer (12) verbunden ist, die im Trägerinnern angeordnet und an eine Saugleitung angeschlossen ist, einen Schweissimpulsleiter (14) zum Abschluss des Kopfes an einen Impulsgeber und einen Druckschalter (16-19), der am Träger angebracht ist und das Auslösen der Schweissimpulse steuert.

4. Vorrichtung nach Anspruch 3, dadurch gekennzeichnet, dass der Träger ein mit der Hand erfassbarer, stiftartiger Träger (10) ist.

5. Verwendung eines Verfahrens nach einem der Ansprüche 1 und 2 oder einer Vorrichtung nach Anspruch 3 oder 4 zum Auswuchten eines Gyroskopschwungrades.

6. Gyroskopschwungrad (6), dadurch gekennzeichnet, dass es mittels kalibrierter Metallkugeln (9) ausgewuchtet ist, die am Schwungrad angeschweisst sind.

7. Schwungrad nach Anspruch 6, dadurch gekennzeichnet, dass die Kugeln (9) einen Durchmesser von 0,3 bis 1 mm aufweisen.

8. Gyroskopschwungrad nach Anspruch 6 oder 7, dadurch gekennzeichnet, dass die Kugeln (9) Kugellager-Stahlkugeln sind.

## Claims

1. A process for balancing a flywheel, wherein flyweights consisting of calibrated metal balls (9) are welded to the flywheel.

2. A process according to claim 1, characterized in that the balls (9) have a diameter of from 0.3 to 1 mm.

3. A device for implementing a process according to claim 1 or claim 2, characterized in that it comprises a support (10) bearing a metal welding head (11) designed to hold a ball under the action of suction, said head being crossed by a suction channel (11a) communicating with a suction chamber (12) situated inside the support and connected to a suction conduit, a welding pulse conductor (14) connecting the head to a pulse generator and a pushbutton switch (16-19) mounted on the support and controlling the triggering of welding pulses.

4. A device according to claim 3, characterized in that the support is an elongate support (10) to be held in the hand.

5. Application of a process according to claim 1 or claim 2 or a device according to claim 3 or claim 4 for balancing a gyroscope flywheel.

6. A gyroscope flywheel (6) characterized in that it is balanced by calibrated metal balls (9) welded to the flywheel.

7. A flywheel according to claim 6, characterized in that the balls (9) have a diameter of from 0.3 to 1 mm.

8. A gyroscope flywheel according to claim 6 or claim 7, characterized in that the balls (9) are steel bearings balls.

FIG_1

FIG.2

FIG.3

FIG.4

15 18 19 16 17 10 12 11 11a 14 15

Fig.3

9 11a 11

18 10 14 9 15